(19) 

**Europäisches Patentamt**
**European Patent Office**
**Office européen des brevets**

(11) **EP 4 768 277 A1**

(12) **EUROPEAN PATENT APPLICATION**

(43) Date of publication:
**01.07.2026 Bulletin 2026/27**

(21) Application number: **25221075.2**

(22) Date of filing: **05.12.2025**

(51) International Patent Classification (IPC):
**B60C 11/00** *(2006.01)* **B60C 9/22** *(2006.01)*

(52) Cooperative Patent Classification (CPC):
**B60C 11/0083; B60C 9/2204;** B60C 11/005;
B60C 2009/2064; B60C 2009/2077;
B60C 2009/209; B60C 2009/2228;
B60C 2009/2271; B60C 2011/0025;
B60C 2011/0033

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.12.2024 JP 2024230420**

(71) Applicant: **Sumitomo Rubber Industries, Ltd.
Kobe-shi, Hyogo 651-0072 (JP)**

(72) Inventors:
• **MASAHIRO, Tatsuta**
  **Kobe-shi, Hyogo, 651-0072 (JP)**
• **MASAYA, Ito**
  **Kobe-shi, Hyogo, 651-0072 (JP)**
• **CHUNLIANG, He**
  **Kobe-shi, Hyogo, 651-0072 (JP)**

• **RYUHEI, Sanae**
  **Kobe-shi, Hyogo, 651-0072 (JP)**
• **ISAO, Sawakami**
  **Kobe-shi, Hyogo, 651-0072 (JP)**
• **TAKUYA, Sato**
  **Kobe-shi, Hyogo, 651-0072 (JP)**
• **NATSUMI, Kita**
  **Kobe-shi, Hyogo, 651-0072 (JP)**
• **TAKUYA, Osawa**
  **Kobe-shi, Hyogo, 651-0072 (JP)**
• **KOHEI, Miyoshi**
  **Kobe-shi, Hyogo, 651-0072 (JP)**
• **TOSHIAKI, Hamada**
  **kobe-shi, Hyogo, 651-0072 (JP)**
• **KIYOTAKA, Ueyama**
  **Kobe-shi, Hyogo, 651-0072 (JP)**

(74) Representative: **Manitz Finsterwald
Patent- und Rechtsanwaltspartnerschaft mbB
Martin-Greif-Straße 1
80336 München (DE)**

(54) **TIRE**

(57) A tire 2 includes a tread 4. A state where the tire 2 is fitted on a standardized rim, an internal pressure of the tire 2 is adjusted to 290 kPa, and no load is applied to the tire 2 is a reference state of the tire 2. A ratio CD/CW of a distance CD in a radial direction from an equator Eq of the tire 2 to a reference ground-contact end PC to a distance CW in an axial direction from the equator Eq of the tire 2 to the reference ground-contact end PC in the tire 2 in the reference state is 0.040 or more and 0.092 or less. A thickness TA of the tread 4 at the equator Eq is 6.0 mm or more and 8.0 mm or less.

Processed by Luminess, 75001 PARIS (FR)

**(Cont. next page)**

EP 4 768 277 A1

Fig. 1

**Description**

BACKGROUND OF THE INVENTION

Field of the Invention

The present invention relates to a tire. Specifically, the present invention relates to a tire that is mounted to a passenger car.

Background Art

In a tire, deformation and restoration are repeated. The tire comes into contact with a road surface at a tread thereof. The shape of a tread surface (also referred to as tread surface profile) influences the performance of the tire. The tread surface profile is adjusted according to the performance required for the tire.

For example, Japanese Laid-Open Patent Publication No. 2017-170939 proposes, in order to improve the wear resistance of each shoulder land portion while suppressing sideslip on ice and snow, adjusting a camber amount at each tread end in addition to the width ratio between each shoulder land portion and each middle land portion.

An object of the present invention is to provide a tire that can achieve improvement of durability in an environment where a load higher than previously assumed acts.

SUMMARY OF THE INVENTION

A tire according to the present invention includes a pair of beads, a carcass extending on and between the pair of beads, a tread located radially outward of the carcass and configured to come into contact with a road surface, a belt located radially outward of the carcass on a radially inner side of the tread, and a band located between the tread and the belt in a radial direction. A state where the tire is fitted on a standardized rim, an internal pressure of the tire is adjusted to 290 kPa, and no load is applied to the tire is a reference state of the tire. A position, on an outer surface of the tire, corresponding to an axially outer end of a ground-contact surface of the tire that is obtained by applying a vertical load to the tire in the reference state and bringing the tire into contact with a flat surface is a reference ground-contact end. The vertical load is a maximum load capacity represented by a load index of a HIGH LOAD CAPACITY type tire specified in the ETRTO STANDARDS MANUAL 2024, having the same dimensional structural characteristics as dimensional structural characteristics included in a tire designation of the tire. A ratio CD/CW of a distance CD in the radial direction from an equator of the tire to the reference ground-contact end to a distance CW in an axial direction from the equator of the tire to the reference ground-contact end in the tire in the reference state is 0.040 or more and 0.092 or less. A thickness TA of the tread at the equator is 6.0 mm or more and 8.0 mm or less.

According to the present invention, a tire that can achieve improvement of durability in an environment where a load higher than previously assumed acts is obtained.

BRIEF DESCRIPTION OF THE DRAWINGS

FIG. 1 is a cross-sectional view showing a part of a tire according to one embodiment of the present invention;
FIG. 2 illustrates the configurations of a carcass and a belt;
FIG. 3 is a perspective view showing a part of a band strip used for forming a band;
FIG. 4 is a cross-sectional view showing the contour of the outer surface of a tread;
FIG. 5 is a cross-sectional view showing a part of a tread portion;
FIG. 6 is a cross-sectional view showing a part of the tread portion in a center region;
FIG. 7 is a cross-sectional view showing a part of the tread portion in a shoulder region;
FIG. 8 is a cross-sectional view showing the configurations of the belt and the band in a center region;
FIG. 9 is a cross-sectional view of a belt cord;
FIG. 10 is a cross-sectional view showing a first modification of the belt cord; and
FIG. 11 is a cross-sectional view showing a second modification of the belt cord.

DETAILED DESCRIPTION

Hereinafter, the present invention will be described in detail based on a preferred embodiment with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state. A state where the tire is fitted on the standardized rim, the internal pressure of the tire is adjusted to 290 kPa, and no load is applied to the tire is referred to as reference state.

In the present invention, unless otherwise specified, the dimensions and angles of each component of the tire are measured in the reference state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a maximum mass allowed to be applied to the tire under specified conditions is a maximum load capacity, and an index representing the maximum load capacity is a load index (LI). Unless otherwise specified, as the load index of the tire of the present invention, a load index for a HIGH LOAD CAPACITY type tire (hereinafter also referred to as HLC tire) specified in the ETRTO STANDARDS MANUAL 2024 is used. That is, the load index of the tire of the present invention is represented as the load index of a HIGH LOAD CAPACITY type tire specified in the ETRTO STANDARDS MANUAL 2024, having the same dimensional structural characteristics as the dimensional structural characteristics included in the tire designation of the tire.

In the present invention, the number of cords included per 50 mm width of a tire component including aligned cords is represented as cord ends (unit: ends/50 mm). Unless otherwise specified, the cord ends are obtained in a cross-section of the component obtained by cutting the component along a plane perpendicular to the longitudinal direction of the cords. Also, in a component including a helically wound cord, it is apparent that a plurality of cords are aligned, and thus cord ends are obtained in the same manner as the tire component including aligned cords.

In the present invention, the complex elastic modulus and the loss tangent of a component formed from a crosslinked rubber, of the components included in the tire, are measured in accordance with the standards of JIS K6394 using a viscoelasticity spectrometer. The measurement conditions are as follows.

$$\text{Initial strain} = 10\%$$

$$\text{Dynamic strain} = \pm 1\%$$

Frequency = 10 Hz
Mode = tensile mode
Temperature = 30°C, 70°C

In this measurement, a test piece (a length of 40 mm $\times$ a width of 4 mm $\times$ a thickness of 1 mm) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the tensile strength and the elongation at break of a component formed from a crosslinked rubber, of the components included in the tire, are measured at a temperature of 23°C in accordance with the standards of JIS K6251 using a tensile tester.

In this measurement, a strip piece (a length of 150 mm × a width of 25 mm × a thickness of 2 mm) is sampled from the tire, and a No. 3 dumbbell test piece is prepared using this strip piece. The strip piece is sampled such that the length direction thereof coincides with the circumferential direction of the tire. If a strip piece cannot be sampled from the tire, a test piece is prepared from the above-described rubber sheet.

In the present invention, the cord strength of a steel cord is represented as a breaking load measured at a temperature of 23°C in accordance with the standards of JIS G3510 using a tensile tester. The tensile speed to obtain the breaking load is set at 50 mm/min.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A center portion of the tread portion is also referred to as crown portion. A portion of the tread portion at each end thereof is also referred to as shoulder portion.

In the drawings of this specification, the tread portion is represented by reference character "T", the bead portion is represented by reference character "B", and the sidewall portion is represented by reference character "S".

[Findings on Which Present Invention Is Based]

Electric vehicles are becoming increasingly widespread due to environmental considerations. Electric vehicles are equipped with batteries. Batteries enabling travelling for a distance of around 500 km are heavy. Electric vehicles tend to be heavier than conventional gasoline-powered vehicles. Thus, higher loads act on tires mounted on electric vehicles, than on tires mounted on gasoline-powered vehicles.

In order to provide tires that can support higher loads, the load index has been reviewed in the ETRTO standards, and a HIGH LOAD CAPACITY type (hereinafter referred to as HLC type) tire has been introduced as a new category.

In order to qualify a tire as an HLC type tire, the tire is required to be able to support an even higher load than conventional tires.

As the load acting on a tire increases, the amount of deformation of the tire increases. It is necessary to consider not only mechanical fatigue due to strain but also thermal fatigue due to heat generation.

Therefore, the present inventors have conducted a thorough study for a technology capable of suppressing strain generated due to the action of a load and suppressing accumulation of heat generated due to the action of the strain in order to improve durability in an environment where a load higher than previously assumed acts, and thus have completed the invention described below.

[Outline of Embodiment of Present Invention]

The present invention is directed to a tire including a pair of beads, a carcass extending on and between the pair of beads, a tread located radially outward of the carcass and configured to come into contact with a road surface, a belt located radially outward of the carcass on a radially inner side of the tread, and a band located between the tread and the belt in a radial direction, wherein a state where the tire is fitted on a standardized rim, an internal pressure of the tire is adjusted to 290 kPa, and no load is applied to the tire is a reference state of the tire, a position, on an outer surface of the tire, corresponding to an axially outer end of a ground-contact surface of the tire that is obtained by applying a vertical load to the tire in the reference state and bringing the tire into contact with a flat surface is a reference ground-contact end, the vertical load is a maximum load capacity represented by a load index of a HIGH LOAD CAPACITY type tire specified in the ETRTO STANDARDS MANUAL 2024, having the same dimensional structural characteristics as dimensional structural characteristics included in a tire designation of the tire, a ratio CD/CW of a distance CD in the radial direction from an equator of the tire to the reference ground-contact end to a distance CW in an axial direction from the equator of the tire to the reference ground-contact end in the tire in the reference state is 0.040 or more and 0.092 or less, and a thickness TA of the tread at the equator is 6.0 mm or more and 8.0 mm or less.

The tire of the present invention can achieve improvement of durability in an environment where a load higher than previously assumed acts. The mechanism by which this effect is achieved has not been clarified but is inferred as follows.

In the tire of the present invention, the outer surface of the tread is formed in a flat shape in an inflated state. The amount of deformation of the tread when the tread comes into contact with a road surface is reduced. Strain generated in the tread due to the action of a load is suppressed. The volume of the tread is reduced, so that heat generated by the action of strain is also inhibited from being accumulated in the tread. The tire can also suppress an increase in the temperature of the tread due to running. The tire can reduce not only mechanical fatigue due to strain but also thermal fatigue due to heat generation.

The tire can achieve improvement of durability in an environment where a load higher than previously assumed acts.

Preferably, a region centered on the equator and having a width in the axial direction that is 110% of a width in the axial direction of the ground-contact surface is a reference region, a region, of the reference region, centered on the equator and having a width in the axial direction that is 55% of the width in the axial direction of the ground-contact surface is a center region, a region, of the reference region, that is a portion on an axially outer side of the center region is a shoulder region, the band is made by helically winding a band strip, the band strip is a cord array in which one or more band cords are arranged, the band includes a full band covering an entirety of the belt, and a ratio Es/Ec of cord ends Es of the full band in the shoulder region to cord ends Ec of the full band in the center region is 1.2 or more and 1.6 or less. In this case, in the shoulder region, the full band has a high value for cord ends Es. The full band in the shoulder region can contribute to reducing strain generated at an end portion of the belt. In the center region RC, the full band has a low value for cord ends Ec. The full band in the center region can contribute to reducing the weight of the band. The lightweight band can contribute to reducing a centrifugal force generated in the tire during running. In particular, since the ratio Es/Ec is set in the above-described range, a constraining force and a centrifugal force are balanced well. The band of the tire can effectively contribute to reducing mechanical fatigue due to strain and reducing thermal fatigue due to heat generation.

Preferably, the tread includes a plurality of rubber layers aligned in the radial direction; among the plurality of rubber layers, the rubber layer located on an outermost side in the radial direction is a cap layer; and a tensile strength TB, an elongation at break EB, and a loss tangent LTc at 30°C of the cap layer satisfy the following formula.

$$20000 \leq TB \times EB/LTc \leq 100000$$

Accordingly, the mechanical strength of the cap layer of the tread is increased, and heat generation in the cap layer is suppressed. The cap layer can effectively contribute to reducing mechanical fatigue due to strain and reducing thermal fatigue due to heat generation.

Since the tensile strength TB, the elongation at break EB, and the loss tangent LTc at 30°C of the cap layer satisfy the above-described formula in addition to the ratio CD/CW being 0.040 or more and 0.092 or less and the thickness TA of the tread at the equator being 6.0 mm or more and 8.0 mm or less, particularly, strain generated in the cap layer which comes into contact with a road surface is effectively suppressed by the synergistic effect of shape and material, and heat generated due to the action of this strain is effectively suppressed. That is, from the viewpoint of reducing mechanical fatigue due to strain and reducing thermal fatigue due to heat generation, it is preferable that the ratio CD/CW is 0.040 or more and 0.092 or less, the thickness TA of the tread at the equator is 6.0 mm or more and 8.0 mm or less, and the tensile strength TB, the elongation at break EB, and the loss tangent LTc at 30°C of the cap layer satisfy the above-described formula.

Preferably, the belt includes a large number of belt cords aligned with each other and a belt topping rubber covering the large number of belt cords, and a loss tangent LTb at 70°C and a complex elastic modulus E*b of the belt topping rubber satisfy the following formula.

$$50 \leq E*b/LTb \leq 150$$

Accordingly, heat generation in the belt topping rubber is suppressed, and the stiffness of the belt topping rubber is appropriately maintained. The belt having this belt topping rubber can effectively contribute to reducing mechanical fatigue due to strain and reducing thermal fatigue due to heat generation.

Preferably, the loss tangent LTb is 0.05 or more and 0.18 or less. Accordingly, heat generation in the belt topping rubber is effectively suppressed. The belt having this belt topping rubber can effectively contribute to reducing thermal fatigue due to heat generation.

Preferably, the belt cords are each a single wire composed of one steel filament, the belt cords each have a cord diameter of 0.36 mm or more and 0.42 mm or less, and the belt cords each have a cord strength of 400 N or more and 540 N or less. In this case, each belt cord can contribute to reducing the weight of the belt. The lightweight belt can contribute to reducing a centrifugal force generated in the tire during running. In particular, since the cord diameter and the cord strength of the belt cord are set in the above-described ranges, a constraining force and a centrifugal force are balanced well. The belt of the tire can effectively contribute to reducing mechanical fatigue due to strain and thermal fatigue due to heat generation.

Preferably, the belt cords are each a twisted wire made by twisting together four steel filaments, the belt cords each have a cord diameter of 0.36 mm or more and 0.55 mm or less, and the belt cords each have a cord strength of 350 N or more and 540 N or less. In this case as well, each belt cord can contribute to reducing the weight of the belt. The lightweight belt can contribute to reducing a centrifugal force generated in the tire during running. In particular, since the cord diameter and the cord strength of the belt cord are set in the above-described ranges, a constraining force and a centrifugal force are balanced well. The belt of the tire can effectively contribute to reducing mechanical fatigue due to strain and thermal fatigue due to heat generation.

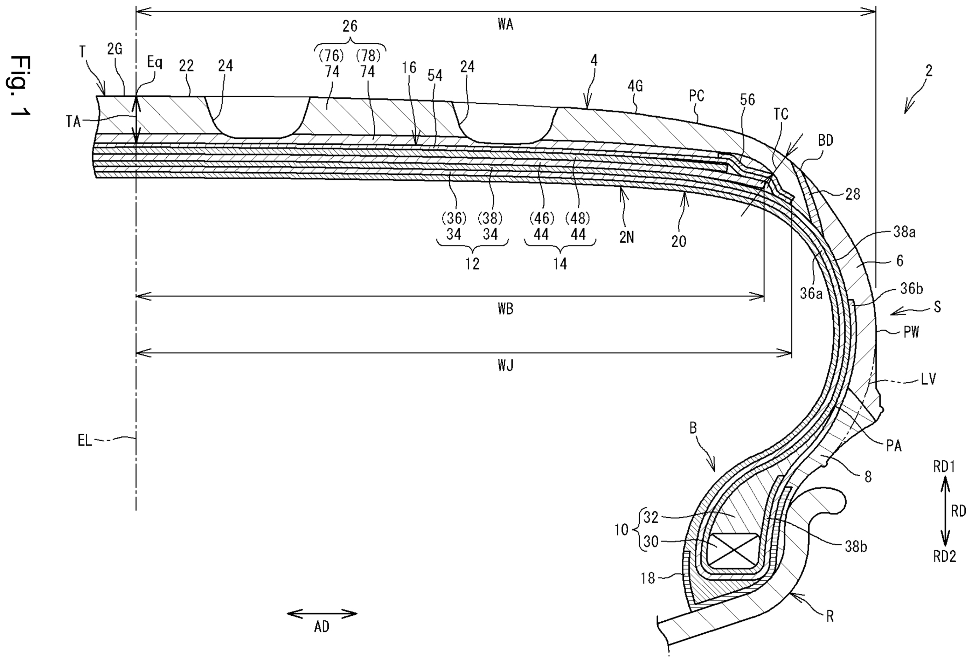

As described above, the tire of the present invention can achieve improvement of durability in an environment where a load higher than previously assumed acts. This tire can stably exhibit its performance even when mounted to an electric vehicle which is heavier than a conventional gasoline-powered vehicle. This will be described in detail below with a tire 2 shown in FIG. 1 as an example.

[Details of Embodiment of Present Invention]

FIG. 1 shows a part of the tire 2 according to one embodiment of the present invention. The tire 2 is a pneumatic tire for a passenger car. The tire 2 is a HIGH LOAD CAPACITY type tire specified in the ETRTO STANDARDS MANUAL 2024. The tire 2 shown in FIG. 1 is fitted on a rim R (standardized rim).

FIG. 1 shows a part of a cross-section, of the tire 2, along a plane including the rotation axis (not shown) of the tire 2. The cross-section shown in FIG. 1 is also referred to as meridian cross-section.

A direction indicated by a double-headed arrow AD is the axial direction of the tire 2. The axial direction of the tire 2 means a direction parallel to the rotation axis of the tire 2. A direction indicated by a double-headed arrow RD is the radial direction of the tire 2. A direction perpendicular to the drawing sheet of FIG. 1 is the circumferential direction of the tire 2. An alternate long and short dash line EL extending in the radial direction represents the equator plane of the tire 2.

In the axial direction, a direction away from the equator plane EL corresponds to the axially outer side of the tire 2, and a direction approaching the equator plane EL corresponds to the axially inner side of the tire 2. A direction indicated by an arrow RD1 corresponds to the radially outer side of the tire 2, and a direction indicated by an arrow RD2 corresponds to the radially inner side of the tire 2.

In FIG. 1, a position indicated by reference character Eq is the point of intersection of an outer surface 2G of the tire 2 (specifically, a tread surface described later) and the equator plane EL. The point of intersection Eq is the equator of the tire 2.

In the case where a groove is located on the equator plane EL, the equator Eq is specified on the basis of a virtual outer surface obtained on the assumption that no groove is provided thereon. The equator Eq is the radially outer end of the tire 2.

In FIG. 1, a position indicated by reference character PW is an axially outer end (hereinafter referred to as outer end PW) of the tire 2. In the case where decorations such as patterns and letters are present on the outer surface 2G, the outer end PW is specified based on a virtual outer surface obtained on the assumption that the decorations are not present thereon (an alternate long and two short dashes line LV in FIG. 1).

In FIG. 1, a length indicated by a double-headed arrow WA is a reference width of the tire 2. The reference width WA of the tire 2 is the distance in the axial direction from the equator plane EL to the outer end PW. Twice the reference width WA corresponds to the maximum width of the tire 2. The outer end PW is also referred to as maximum width position.

The tire 2 includes a tread 4, a pair of sidewalls 6, a pair of clinches 8, a pair of beads 10, a carcass 12, a belt 14, a band 16, a pair of chafers 18, and an inner liner 20.

The tread 4 is located radially outward of the carcass 12. The tread 4 is formed from a crosslinked rubber. In FIG. 1, a length indicated by a double-headed arrow TA is the thickness of the tread 4 at the equator Eq. The thickness TA is measured along the equator plane EL.

The tread 4 comes into contact with a road surface at a tread surface 22 thereof. The tread 4 has the tread surface 22 that comes into contact with a road surface. The outer surface 2G of the tire 2 includes the tread surface 22.

Grooves 24 are formed in the tread 4. Accordingly, a tread pattern is formed.

In FIG. 1, a position indicated by reference character BD is the boundary between the tread 4 and the sidewall 6 described later, on the outer surface 2G of the tire 2. The boundary BD is also an end of an outer surface 4G of the tread 4.

In FIG. 1, a position indicated by reference character PC is a reference ground-contact end. In the present invention, the reference ground-contact end PC is a position, on the outer surface 2G of the tire 2, corresponding to an axially outer end of a ground-contact surface of the tire 2 that is obtained by applying a vertical load to the tire 2 in the reference state and bringing the tire 2 into contact with a flat surface, using a tire ground-contact surface shape measuring device (not shown). The vertical load applied to the tire 2 is a maximum load capacity represented by the load index of a HIGH LOAD CAPACITY type tire specified in the ETRTO STANDARDS MANUAL 2024, having the same dimensional structural characteristics as the dimensional structural characteristics included in the tire designation of the tire 2.

To obtain the ground-contact surface, the tire 2 is placed such that the axial direction thereof is parallel to the road surface. The load is applied to the tire 2 in a direction perpendicular to the road surface. In other words, the above-described vertical load is applied to the tire 2 in a state where the camber angle of the tire 2 is set to 0°.

The tread 4 has a tread body 26 and a pair of wings 28. The tread body 26 mainly comes into contact with a road surface. Each wing 28 is located between the tread body 26 and the sidewall 6. The tread body 26 and the sidewall 6 are joined via the wing 28. The wing 28 is formed from a crosslinked rubber for which adhesiveness is taken into consideration.

Each sidewall 6 is connected to the tread 4. The sidewall 6 is located axially outward of the carcass 12. The sidewall 6 is formed from a crosslinked rubber for which cut resistance is taken into consideration.

Each clinch 8 is located radially inward of the sidewall 6. The clinch 8 comes into contact with the rim R. The clinch 8 is formed from a crosslinked rubber for which wear resistance is taken into consideration.

Each bead 10 is located radially inward of the sidewall 6. The bead 10 is located axially inward of the clinch 8.

The bead 10 includes a core 30 and an apex 32. The core 30 extends in the circumferential direction. The core 30 includes a steel wire which is not shown. The apex 32 is located radially outward of the core 30. The apex 32 is formed from a crosslinked rubber that has high stiffness. The apex 32 is tapered outward in the radial direction.

In FIG. 1, a position indicated by reference character PA is the outer end of the apex 32. The outer end PA of the apex 32 is located radially inward of the axially outer end PW of the tire 2. The outer end PA of the apex 32 is also the outer end of the bead 10.

The carcass 12 is located inward of the tread 4, the pair of sidewalls 6, and the pair of clinches 8. The carcass 12 extends on and between the pair of beads 10.

The carcass 12 includes at least one carcass ply 34. The carcass 12 of the tire 2 is composed of two carcass plies 34. Of the two carcass plies 34, the carcass ply 34 located on the inner side on the radially inner side of the tread 4 is a first carcass ply 36, and the carcass ply 34 located on the outer side on the radially inner side of the tread 4 is a second carcass ply 38.

The first carcass ply 36 is turned up from the inner side to the outer side in the axial direction at each bead 10. The first carcass ply 36 includes a first ply body 36a and a pair of first turned-up portions 36b. The first ply body 36a extends between the pair of beads 10. The respective first turned-up portions 36b are connected to the first ply body 36a and turned up at the respective beads 10. An end of each first turned-up portion 36b is located radially outward of the axially outer end PW of the tire 2.

The second carcass ply 38 is turned up from the inner side to the outer side in the axial direction at each bead 10. The second carcass ply 38 includes a second ply body 38a and a pair of second turned-up portions 38b. The second ply body 38a extends between the pair of beads 10. The respective second turned-up portions 38b are connected to the second ply body 38a and turned up at the respective beads 10. An end of each second turned-up portion 38b is located radially inward of the outer end PA of the apex 32. The end of each second turned-up portion 38b is covered with the first turned-up portion 36b.

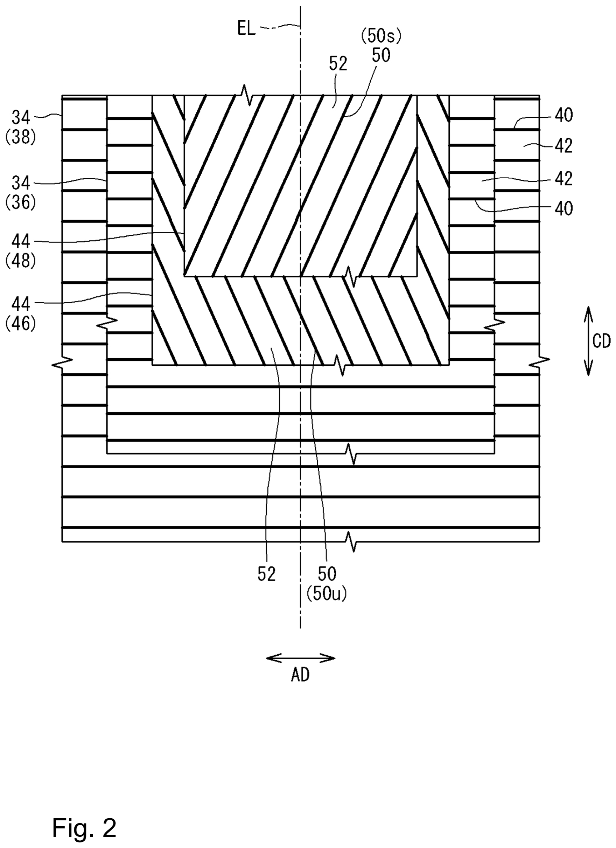

FIG. 2 illustrates the configurations of the carcass 12 and the belt 14. In FIG. 2, a direction indicated by a double-headed arrow CD is the circumferential direction of the tire 2. The front side of the drawing sheet of FIG. 2 is the radially outer side, and the back side thereof is the radially inner side.

Each carcass ply 34 constituting the carcass 12 includes a large number of carcass cords 40 aligned with each other. In FIG. 2, for convenience of description, the carcass cords 40 are represented by solid lines, but the carcass cords 40 are covered with a carcass topping rubber 42.

The carcass cords 40 intersect the equator plane EL. The carcass 12 of the tire 2 has a radial structure. The carcass cords 40 are cords formed from an organic fiber (hereinafter referred to as organic fiber cords). Examples of the organic fiber include nylon fibers, rayon fibers, polyester fibers, and aramid fibers.

The belt 14 is located radially inward of the tread 4. The belt 14 is located radially outward of the carcass 12. The belt 14 of the tire 2 is stacked on the carcass 12 on the radially inner side of the tread 4.

The belt 14 includes a plurality of belt plies 44 aligned in the radial direction. The plurality of belt plies 44 include an inner belt ply 46 located on the innermost side and an outer belt ply 48 located on the outermost side. The belt 14 of the tire 2 is composed of two belt plies 44, specifically the inner belt ply 46 and the outer belt ply 48.

The inner belt ply 46 is stacked on the carcass 12 on the radially inner side of the tread 4. The outer belt ply 48 is stacked on the inner belt ply 46.

Each end of the outer belt ply 48 is located axially inward of an end of the inner belt ply 46. The outer belt ply 48 is narrower than the inner belt ply 46.

Each belt ply 44 constituting the belt 14 includes a large number of belt cords 50 aligned with each other. In FIG. 2, for convenience of description, the belt cords 50 are represented by solid lines, but the belt cords 50 are covered with a belt topping rubber 52. The belt 14 includes the large number of belt cords 50 aligned with each other and the belt topping rubber 52 covering the large number of belt cords 50. The belt cords 50 are steel cords. The belt topping rubber 52 is a crosslinked rubber.

Each belt cord 50 included in the belt 14 is inclined with respect to the circumferential direction. As shown in FIG. 2, the direction of inclination of the belt cords 50 included in the outer belt ply 48 (hereinafter referred to as outer belt cords 50s) and the direction of inclination of the belt cords 50 included in the inner belt ply 46 (hereinafter referred to as inner belt cords 50u) are opposite to each other.

In FIG. 1, a length indicated by a double-headed arrow WB is a reference width of the belt 14. The reference width WB of the belt 14 is the distance in the axial direction from the equator plane EL to an end of the belt 14. Twice the reference width WB corresponds to the width in the axial direction of the belt 14.

In the tire 2, the reference width WB of the belt 14 is set in the range of 70% or more and 95% or less of the reference width WA of the tire 2.

The band 16 is stacked on the belt 14 on the radially inner side of the tread 4. The band 16 is located between the tread 4 and the belt 14 in the radial direction. Each end of the band 16 is located axially outward of the end of the belt 14.

The band 16 of the tire 2 includes a full band 54 and a pair of edge bands 56.

The full band 54 covers the entirety of the belt 14. The pair of edge bands 56 are placed so as to be spaced apart from each other in the axial direction with the equator plane EL located therebetween. Each edge band 56 is located radially outward of the full band 54. The edge band 56 covers an end of the full band 54. The band 16 may be composed only of the full band 54.

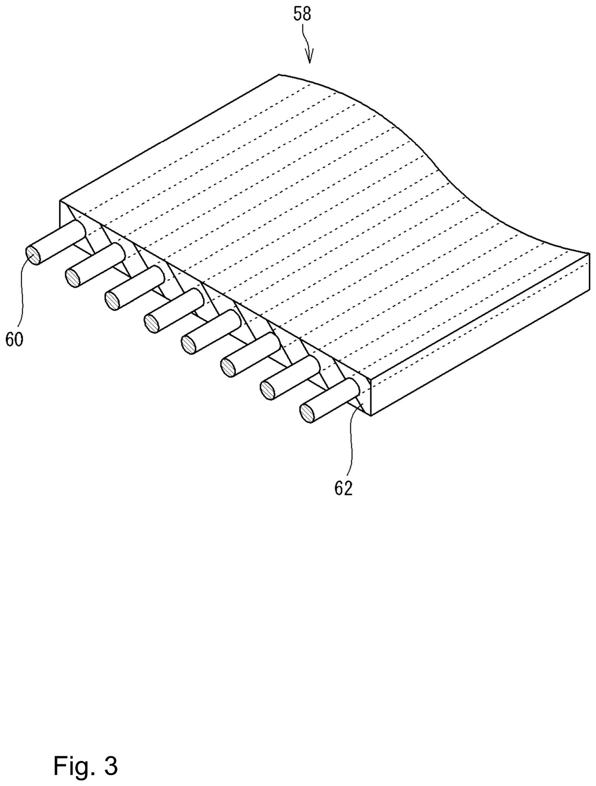

The band 16 of the tire 2 is formed using a band strip 58 shown in FIG. 3. The band strip 58 has a band shape. The band strip 58 includes one or more band cords 60. The band strip 58 shown in FIG. 3 includes eight band cords 60. The band cords 60 are covered with a band topping rubber 62. In the tire 2, the band topping rubber 62 is a crosslinked rubber.

The eight band cords 60 are aligned in the width direction of the band strip 58 and extend in the length direction of the band strip 58. The band strip 58 is a cord array in which the one or more band cords 60 are arranged.

The band strip 58 is helically wound to form the band 16. The band 16 is made by helically winding the band strip 58. The band 16 includes the helically wound band cords 60. In the band 16, the band cords 60 extend substantially in the circumferential direction. Specifically, an angle of each band cord 60 with respect to the circumferential direction is 5° or less. The band 16 has a jointless structure.

Each band cord 60 is an organic fiber cord. Examples of the organic fiber include nylon fibers, rayon fibers, polyester fibers, and aramid fibers. The band cords 60 are not particularly limited, and an organic fiber cord that is generally used as a tire band cord is used as each band cord 60.

The band 16 includes a band cord 60 which is an organic fiber cord and extends substantially in the circumferential direction.

In FIG. 1, a length indicated by a double-headed arrow WJ is a reference width of the band 16. The reference width WJ of the band 16 is the distance in the axial direction from the equator plane EL to the end of the band 16. Twice the reference width WJ corresponds to the width in the axial direction of the band 16.

In the tire 2, the reference width WJ of the band 16 is set in the range of 90% or more and 110% or less of the reference width WB of the belt 14.

Each chafer 18 is located radially inward of the bead 10. The chafer 18 comes into contact with the rim R. The chafer 18 of the tire 2 includes a fabric and a rubber with which the fabric is impregnated.

The inner liner 20 is located inward of the carcass 12. The inner liner 20 forms an inner surface 2N of the tire 2. The inner liner 20 is formed from a crosslinked rubber that has an excellent air barrier property. The inner liner 20 maintains the internal pressure of the tire 2.

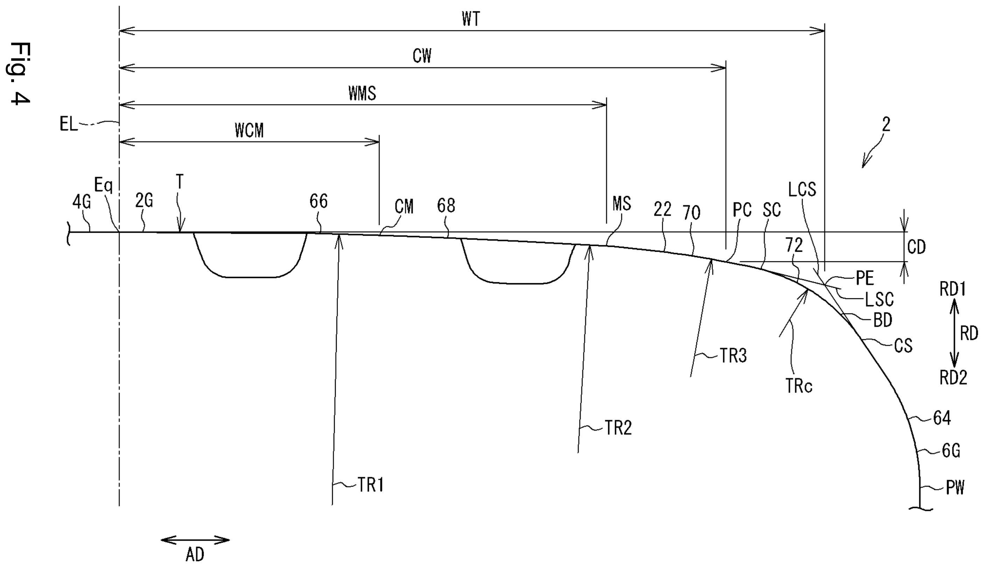

FIG. 4 shows a part of the contour line of the outer surface 2G of the tire 2 in the meridian cross-section of the tire 2. The contour line of the outer surface 2G is represented by a virtual outer surface obtained on the assumption that no grooves and no decorations such as patterns and letters are present thereon. Although not described in detail, in the present invention, the contour line of the outer surface 2G is obtained by measuring the outer surface shape of the tire 2 in a state where the tire 2 is fitted on the rim R, the inside of the tire 2 is filled with air, and the internal pressure of the tire 2 is adjusted, for example, using a displacement sensor.

The contour line of the outer surface 2G shown in FIG. 4 represents the outer surface shape of the tire 2 in the reference state. The contour of the outer surface 2G represented by the contour line has a shape that is symmetrical with respect to the equator plane EL.

The outer surface 2G of the tire 2 includes the tread surface 22 and a pair of side surfaces 64 connected to the tread surface 22. The tread surface 22 is divided into seven parts aligned in the axial direction. The tread surface 22 includes a crown portion 66, a pair of middle portions 68, a pair of shoulder portions 70, and a pair of corner portions 72 as the seven parts.

The crown portion 66 is located at the center in the axial direction. The equator plane EL intersects the crown portion 66. The pair of middle portions 68 are each located axially outward of the crown portion 66. A position indicated by reference character CM is the boundary between the crown portion 66 and the middle portion 68. The pair of shoulder portions 70 are each located axially outward of the middle portion 68. A position indicated by reference character MS is the boundary between the middle portion 68 and the shoulder portion 70. The pair of corner portions 72 are each located axially outward of the shoulder portion 70. A position indicated by reference character SC is the boundary between the shoulder portion 70 and the corner portion 72.

The crown portion 66 is a part located at the center in the axial direction. Each corner portion 72 is a part located on the outermost side in the axial direction. Each middle portion 68 and each shoulder portion 70 are parts located between the crown portion 66 and the corner portion 72.

As described above, each corner portion 72 is a part located on the outermost side in the axial direction. The corner portion 72 is connected to the side surface 64. A position indicated by reference character CS is the boundary between the corner portion 72 and the side surface 64. The boundary CS is also an end of the tread surface 22.

As shown in FIG. 4, the boundary BD between the outer surface 4G of the tread 4 and an outer surface 6G of the sidewall 6 is included in the corner portion 72. In the tire 2, the outer surface 4G of the tread 4 is included in the tread surface 22. The outer surface 2G of the tire 2 may be formed such that the boundary BD between the outer surface 4G of the tread 4 and the outer surface 6G of the sidewall 6 coincides with the end CS of the tread surface 22.

In FIG. 4, a double-headed arrow WCM indicates the distance in the axial direction from the equator plane EL to the boundary CM between the crown portion 66 and the middle portion 68. A double-headed arrow WMS indicates the distance in the axial direction from the equator plane EL to the boundary MS between the middle portion 68 and the shoulder portion 70.

In the tire 2, the distance WCM in the axial direction is set in the range of 30% or more and 40% or less of the reference width WA of the tire 2. The distance WMS in the axial direction is set in the range of 55% or more and 65% or less of the reference width WA of the tire 2.

In the tire 2, in the meridian cross-section thereof, each of the contours of the crown portion 66, each middle portion 68, each shoulder portion 70, and each corner portion 72 is represented by an arc.

The contour of the crown portion 66 is represented by an arc having a center on the equator plane EL. In FIG. 4, an arrow TR1 indicates the radius of the arc representing the contour of the crown portion 66.

The contour of each middle portion 68 is represented by an arc tangent to the arc representing the contour of the crown portion 66. In FIG. 4, an arrow TR2 indicates the radius of the arc representing the contour of the middle portion 68. The arc representing the contour of the middle portion 68 is tangent to the arc representing the contour of the crown portion 66, at the boundary CM. The boundary CM is the tangent point between the arc representing the contour of the middle portion 68 and the arc representing the contour of the crown portion 66.

The contour of each shoulder portion 70 is represented by an arc tangent to the arc representing the contour of the middle portion 68. In FIG. 4, an arrow TR3 indicates the radius of the arc representing the contour of the shoulder portion 70. The arc representing the contour of the shoulder portion 70 is tangent to the arc representing the contour of the middle portion 68, at the boundary MS. The boundary MS is the tangent point between the arc representing the contour of the shoulder portion 70 and the arc representing the contour of the middle portion 68.

The contour of each corner portion 72 is represented by an arc tangent to the arc representing the contour of the shoulder portion 70. In FIG. 4, an arrow TRc indicates the radius of the arc representing the contour of the corner portion 72. The arc representing the contour of the corner portion 72 is tangent to the arc representing the contour of the shoulder portion 70, at the boundary SC. The boundary SC is the tangent point between the arc representing the contour of the corner portion 72 and the arc representing the contour of the shoulder portion 70. The arc representing the contour of the corner portion 72 is tangent to a contour line of the side surface 64 at the boundary CS. The boundary CS is the tangent point between the arc representing the contour of the corner portion 72 and the contour line of the side surface 64.

In the contour line of the outer surface 4G of the tread 4, the arc representing the contour of the crown portion 66 is represented as an arc that has the largest overlap length with the contour line from the equator Eq. The arc representing the contour of the middle portion 68 is represented as an arc that is tangent to an end of the arc representing the contour of the crown portion 66 and has the largest overlap length with the contour line from this end. The end of the arc representing the contour of the crown portion 66 is one end of the arc representing the contour of the middle portion 68 and is the boundary CM between the crown portion 66 and the middle portion 68. The arc representing the contour of the shoulder portion 70 is represented as an arc that is tangent to the other end of the arc representing the contour of the middle portion 68 and has the largest overlap length with the contour line from this other end. The other end of the arc representing the contour of the middle portion 68 is one end of the arc representing the contour of the shoulder portion 70 and is the boundary MS between the middle portion 68 and the shoulder portion 70. The arc representing the contour of the corner portion 72 is represented as an arc that is tangent to the other end of the arc representing the contour of the shoulder portion 70 and has the largest overlap length with the contour line from this other end. The other end of the arc representing the contour of the shoulder portion 70 is one end of the arc representing the contour of the corner portion 72 and is the boundary SC between the shoulder portion 70 and the corner portion 72. The other end of the arc representing the contour of the corner portion 72 is the end CS of the tread surface 22 and is the boundary CS between the tread surface 22 and the side surface 64.

A straight line LSC is a tangent line that is tangent to the arc representing the contour of the corner portion 72, at the boundary SC. A straight line LCS is a tangent line that is tangent to the arc representing the contour of the corner portion 72, at the boundary CS.

Reference character PE indicates the point of intersection of the tangent line LSC and the tangent line LCS. In the present invention, the point of intersection PE is a reference end of the tread 4. A length indicated by a double-headed arrow WT is the distance in the axial direction from the equator plane EL to the reference end PE.

In the tire 2, the distance WT in the axial direction is 85% or more and 100% or less and preferably 85% or more and less than 100% of the reference width WA of the tire 2.

Of two adjacent parts, the arc representing the contour of the part located on the axially outer side has a radius smaller than the radius of the arc representing the contour of the part located axially inward of this part. The radius TR1 of the arc representing the contour of the crown portion 66 is larger than the radius TR2 of the arc representing the contour of the middle portion 68. The radius TR2 of the arc representing the contour of the middle portion 68 is larger than the radius TR3 of the arc representing the contour of the shoulder portion 70. The radius TR3 of the arc representing the contour of the shoulder portion 70 is larger than the radius TRc of the arc representing the contour of the corner portion 72.

Among the seven parts constituting the tread surface 22, the arc representing the contour of the crown portion 66 located at the center in the axial direction has the largest radius TR1, and the arc representing the contour of the corner portion 72 located on each outermost side in the axial direction has the smallest radius TRc. The radius TRc is smaller than the radius TR1. Specifically, the ratio TRc/TR1 of the radius TRc to the radius TR1 is 0.010 or more and 0.020 or less.

In FIG. 4, a length indicated by a double-headed arrow CW is the distance in the axial direction from the equator Eq of the tire 2 to the reference ground-contact end PC. The distance CW in the axial direction is also referred to as reference ground-contact width. A length indicated by a double-headed arrow CD is the distance in the radial direction from the equator Eq of the tire 2 to the reference ground-contact end PC. The distance CD in the radial direction is a camber amount at the reference ground-contact end PC. In the present invention, the reference ground-contact width CW and the camber amount CD at the reference ground-contact end PC are obtained in the tire 2 in the reference state.

In the tire 2 in the reference state, a ratio CD/CW of the camber amount CD at the reference ground-contact end PC to the reference ground-contact width CW is 0.040 or more and 0.092 or less. Accordingly, the outer surface 4G of the tread 4 is formed in a flat shape in an inflated state. The amount of deformation of the tread 4 when the tread 4 comes into contact with a road surface is reduced. Strain generated in the tread 4 due to the action of a load is suppressed. The tire 2 can reduce mechanical fatigue due to strain.

In the tire 2, strain generated in the tread 4 due to the action of a load can be suppressed by forming the outer surface 4G of the tread 4 in a flat shape in an inflated state. Therefore, a thin tread that could not be used in conventional tires can be used in the tire 2. Specifically, the thickness TA of the tread 4 of the tire 2 is 6.0 mm or more and 8.0 mm or less. The volume of the tread 4 is reduced, so that heat generated by the action of strain is also inhibited from being accumulated in the tread 4. The tire 2 can suppress an increase in the temperature of the tread 4 due to running. The tire 2 can reduce not only mechanical fatigue due to strain but also thermal fatigue due to heat generation.

The tire 2 can achieve improvement of durability in an environment where a load higher than previously assumed acts.

As described above, in the tire 2 in the reference state, the ratio CD/CW of the camber amount CD at the reference ground-contact end PC to the reference ground-contact width CW is 0.040 or more and 0.092 or less. From the viewpoint of reducing mechanical fatigue due to strain, the ratio CD/CW is preferably 0.040 or more and 0.066 or less and more preferably 0.040 or more and 0.055 or less.

As described above, the thickness TA of the tread 4 of the tire 2 is 6.0 mm or more and 8.0 mm or less. From the viewpoint of reducing thermal fatigue due to heat generation, the thickness TA of the tread 4 is preferably 6.0 mm or more and 7.5 mm or less and more preferably 6.0 mm or more and 7.0 mm or less.

The radius TR1 of the arc representing the contour of the crown portion 66 is preferably 1000 mm or more. Accordingly, the outer surface 4G of the tread 4 is formed in a flat shape in an inflated state. The amount of deformation of the tread 4 when the tread 4 comes into contact with a road surface is reduced. Strain generated in the tread 4 due to the action of a load is suppressed. The tire 2 can reduce mechanical fatigue due to strain. From this viewpoint, the radius TR1 of the arc representing the contour of the crown portion 66 is preferably 1300 mm or more and more preferably 1500 mm or more. From the viewpoint that the crown portion 66 is recessed radially inward and an excessive increase in a ground-contact pressure at each shoulder portion 70 is suppressed, the radius TR1 is preferably 3000 mm or less and more preferably 2500 mm or less.

As described above, the radius TR1 of the arc representing the contour of the crown portion 66 is larger than the radius TR2 of the arc representing the contour of the middle portion 68. Specifically, the ratio TR2/TR1 of the radius TR2 of the arc representing the contour of the middle portion 68 to the radius TR1 of the arc representing the contour of the crown portion 66 is preferably 0.45 or more and 0.55 or less. Accordingly, strain generated in the tread 4 due to the action of a load is suppressed. The tire 2 can reduce mechanical fatigue due to strain. From this viewpoint, the ratio TR2/TR1 is more preferably 0.47 or more and 0.53 or less.

As described above, the radius TR2 of the arc representing the contour of the middle portion 68 is larger than the radius TR3 of the arc representing the contour of the shoulder portion 70. Since the radius TR1 of the arc representing the contour of the crown portion 66 is larger than the radius TR2 of the arc representing the contour of the middle portion 68, the radius TR3 of the arc representing the contour of the shoulder portion 70 is smaller than the radius TR1 of the arc representing the contour of the crown portion 66. Specifically, the ratio TR3/TR1 of the radius TR3 of the arc representing the contour of the shoulder portion 70 to the radius TR1 of the arc representing the contour of the crown portion 66 is preferably 0.05 or more and 0.15 or less. Accordingly, strain generated in the tread 4 due to the action of a load is suppressed. The tire 2 can reduce mechanical fatigue due to strain. From this viewpoint, the ratio TR3/TR1 is more preferably 0.07 or more and 0.13 or less.

In FIG. 1, a length indicated by a double-headed arrow TC is the thickness of the tread 4 at the end of the belt 14.

The thickness TC is measured along a normal line of the outer surface 2G of the tire 2 that passes through the end of the belt 14 in the meridian cross-section of the tire 2.

The ratio TC/TA of the thickness TC of the tread 4 at the end of the belt 14 to the thickness TA of the tread 4 at the equator Eq is preferably 0.40 or more and 0.85 or less. Accordingly, the volume of the tread 4 is effectively reduced, so that heat generated due to the action of strain is inhibited from being accumulated in the tread 4. The tire 2 can suppress an increase in the temperature of the tread 4 due to running. The tire 2 can reduce thermal fatigue due to heat generation. From this viewpoint, the ratio TC/TA is more preferably 0.43 or more and 0.65 or less and further preferably 0.45 or more and 0.55 or less.

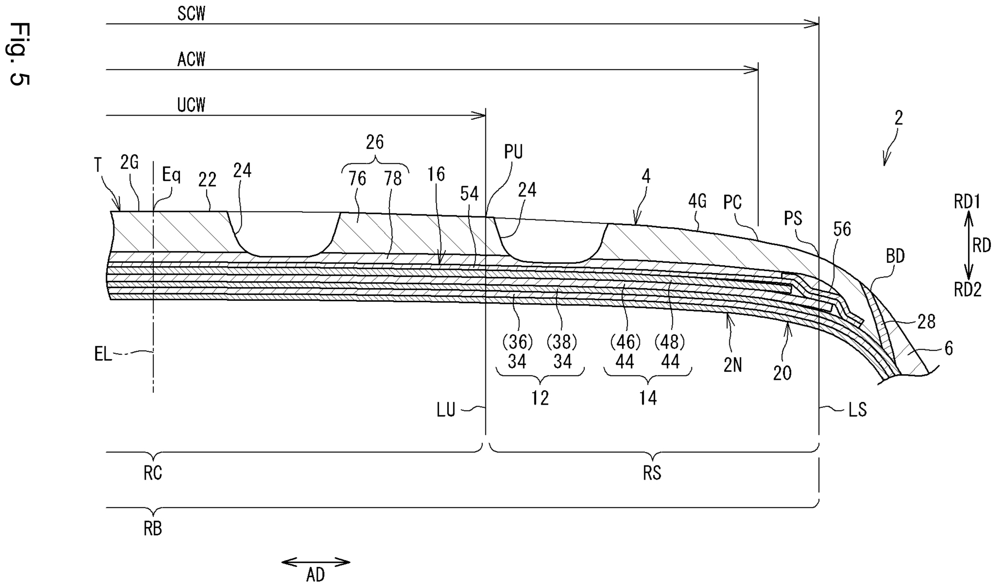

FIG. 5 shows a part of the cross-section shown in FIG. 1. FIG. 5 shows a part of a tread portion T.

In FIG. 5, a length indicated by a double-headed arrow ACW is the width in the axial direction of the ground-contact surface, that is, a ground-contact width. The ground-contact width ACW is the distance in the axial direction from one reference ground-contact end PC to the other reference ground-contact end PC. The ground-contact width ACW is equal to twice the above-described reference ground-contact width CW.

Reference character PS indicates a position, on the outer surface 2G of the tire 2, located axially outward of the reference ground-contact end PC. A solid line LS is a straight line that passes through the position PS and extends in the radial direction. In the tire 2, a region from one straight line LS to the other straight line LS is referred to as reference region RB.

A length indicated by a double-headed arrow SCW is the width in the axial direction of the reference region RB. The equator Eq is located at the axial center of the reference region RB.

In the tire 2, the width SCW in the axial direction of the reference region RB is set to 110% of the ground-contact width ACW. The reference region RB is a region centered on the equator Eq and having a width in the axial direction that is 110% of the width ACW in the axial direction of the ground-contact surface.

Reference character PU indicates a position, on the outer surface 2G of the tire 2, located axially inward of the reference ground-contact end PC. A solid line LU is a straight line that passes through the position PU and extends in the radial direction. In the tire 2, a region from one straight line LU to the other straight line LU is referred to as center region RC.

A length indicated by a double-headed arrow UCW is the width in the axial direction of the center region RC. The equator Eq is located at the axial center of the center region RC.

In the tire 2, the width UCW in the axial direction of the center region RC is set to 55% of the ground-contact width ACW. The center region RC is a region, of the reference region RB, centered on the equator Eq and having a width in the axial direction that is 55% of the width ACW in the axial direction of the ground-contact surface.

In FIG. 5, a region from the straight line LU to the straight line LS is referred to as shoulder region RS. The shoulder region RS is a region, of the reference region RB, that is a portion on the axially outer side of the center region RC. The shoulder region RS is located axially outward of the center region RC.

The reference region RB is composed of the center region RC and a pair of shoulder regions RS.

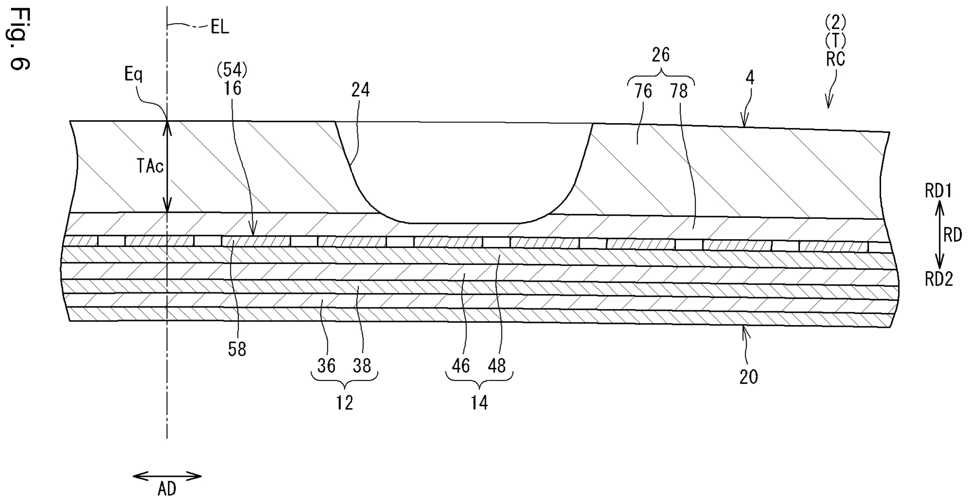

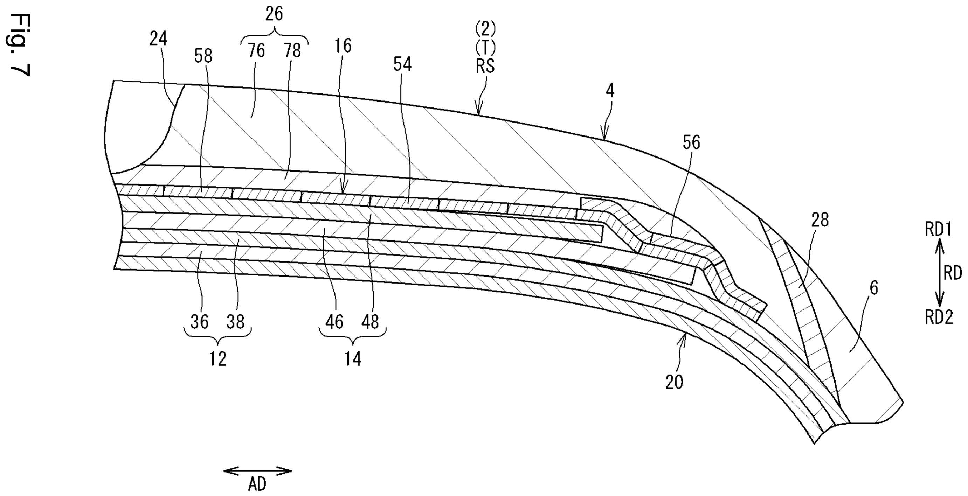

FIG. 6 shows a part of FIG. 5. FIG. 6 shows a part of the center region RC. FIG. 7 also shows a part of FIG. 5. FIG. 7 shows a part of the shoulder region RS.

As described above, the band 16 of the tire 2 is made by helically winding the band strip 58. As shown in FIGS. 6 and 7, the cross-section of the band 16 includes cross-sections of multiple band strips 58.

The cord ends of the full band 54 and the edge band 56 in the band 16 are controlled by adjusting the number of band cords 60 included in the band strip 58 and the manner in which the band strip 58 is wound.

In the full band 54 in the center region RC, the band strip 58 is helically wound with gaps. As shown in FIG. 6, in the full band 54 in the center region RC, the cross-sections of the band strips 58 are aligned with gaps. In FIG. 6, for convenience of description, the gaps are shown as spaces, but in the actual tire 2, there are no such gaps, and portions corresponding to the gaps are filled with rubber. In contrast, in the full band 54 in the shoulder region RS, the band strip 58 is helically wound without gaps. In each edge band 56 as well, the band strip 58 is helically wound without gaps. As shown in FIG. 7, in the full band 54 in the shoulder region RS, the cross-sections of the band strips 58 are aligned without gaps. In the edge band 56 in the shoulder region RS as well, the cross-sections of the band strips 58 are aligned without gaps.

In the center region RC, the full band 54 is formed by sparsely winding the band strip 58, and in the shoulder region RS, the full band 54 is formed by densely winding the band strip 58. Cord ends Es of the full band 54 in the shoulder region RS are larger than cord ends Ec of the full band 54 in the center region RC. Specifically, the ratio Es/Ec of the cord ends Es of the full band 54 in the shoulder region RS to the cord ends Ec of the full band 54 in the center region RC is preferably 1.2 or more and 1.6 or less. In this case, in the shoulder region RS, the full band 54 has a high value for cord ends Es. The full band 54 in the shoulder region RS can contribute to reducing strain generated at an end portion of the belt 14. In the center region RC, the full band 54 has a low value for cord ends Ec. The full band 54 in the center region RC can contribute to reducing the weight of the band 16. The lightweight band 16 can contribute to reducing a centrifugal force generated in the tire 2 during running. In particular, since the ratio Es/Ec is set in the above-described range, a constraining force and a centrifugal force are balanced well. The band 16 of the tire 2 can effectively contribute to reducing mechanical fatigue due to strain and reducing thermal fatigue due to heat generation. From this viewpoint, the ratio Es/Ec is more preferably 1.3 or more and 1.5 or less.

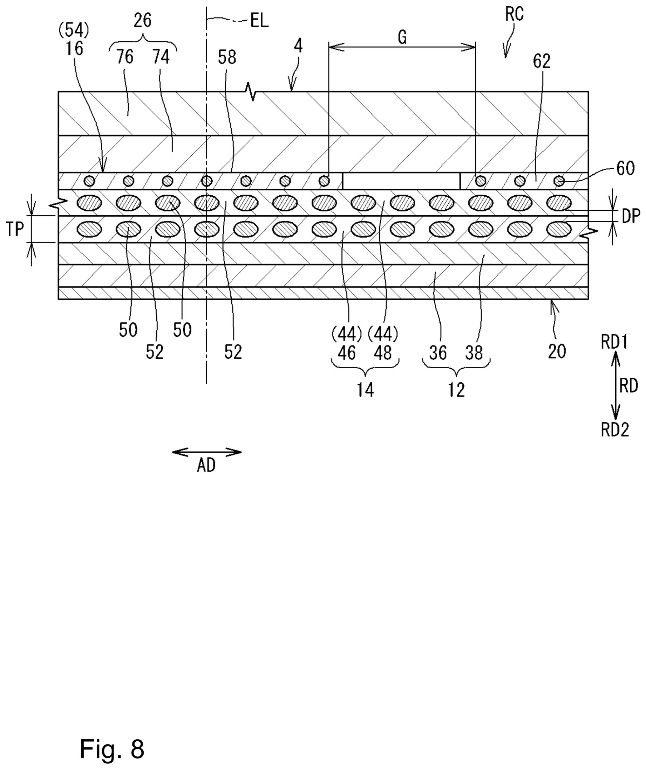

FIG. 8 shows a part of FIG. 6. FIG. 8 shows the configurations of the belt 14 and the band 16 in the center region RC.

As described above, in the full band 54 in the center region RC, the cross-sections of the band strips 58 are aligned with gaps. In FIG. 8, a length indicated by a double-headed arrow G represents the size of a gap formed between the cross-sections of two adjacent band strips 58 (hereinafter referred to as band strip cross-sections) in the cross-section of the full band 54. The gap G is represented as the shortest distance between a band cord cross-section located on the side of another band strip cross-section located adjacently among the cross-sections of multiple band cords 60 (hereinafter referred to as band cord cross-sections) included in one band strip cross-section and a band cord cross-section located on the side of the one band strip cross-section among multiple band cord cross-sections included in the other band strip cross-section.

As described above, twice the reference width WA of the tire 2 corresponds to the maximum width of the tire 2. From the viewpoint that the band 16 can effectively contribute to reducing mechanical fatigue due to strain and thermal fatigue due to heat generation, the ratio of the gap G to the maximum width of the tire 2 is preferably 0.8% or more and 1.5% or less and more preferably 1.2% or more and 1.4% or less.

The tread 4 of the tire 2, specifically the tread body 26, generally includes a plurality of rubber layers 74 aligned in the radial direction. Among the plurality of rubber layers 74, the rubber layer 74 located on the outermost side in the radial direction is a cap layer 76. Among the plurality of rubber layers 74, the rubber layer 74 located on the innermost side in the radial direction is a base layer 78. The tread body 26 of the tire 2 is composed of two layers, that is, the cap layer 76 and the base layer 78. For the cap layer 76, a crosslinked rubber for which contact with a road surface is taken into consideration and for which wear resistance and grip performance are taken into consideration is used. The base layer 78 is located radially inward of the cap layer 76. The base layer 78 is covered with the cap layer 76. For the base layer 78, a crosslinked rubber for which adhesiveness and influence on rolling resistance are taken into consideration is used.

The tread body 26 may be composed of three rubber layers 74 aligned in the radial direction. In this case, an intermediate layer is provided between the cap layer 76 on the outermost side in the radial direction and the base layer 78 on the innermost side in the radial direction. The characteristics of the intermediate layer are adjusted according to the specifications of a vehicle to which the tire 2 is mounted. The tread body 26 may be composed of one rubber layer 74. In this case, the tread body 26 is composed only of the cap layer 76.

In FIG. 6, a length indicated by a double-headed arrow TAc is the thickness of the cap layer 76 at the equator Eq. The thickness TAc is measured along the equator plane EL.

In the tire 2, the ratio TAc/TA of the thickness TAc of the cap layer 76 to the thickness TA of the tread 4 is set in the range of 70% or more and 100% or less. In the case where the tread body 26 is composed of three layers, the ratio TAc/TA is set in the range of 30% or more and 40% or less. In this case, the thicknesses of the intermediate layer and the base layer 78 are set according to the specifications of the vehicle to which the tire 2 is mounted. The ratio TAc/TA being 100% means that the entire tread body 26 is composed of the cap layer 76.

In the tire 2, it is preferable that a tensile strength TB, an elongation at break EB, and a loss tangent LTc at 30°C of the cap layer 76 satisfy the following formula.

$$20000 \leq TB \times EB/LTc \leq 100000$$

In the tire 2, the mechanical strength of the cap layer 76 of the tread 4 is increased, and heat generation in the cap layer 76 is suppressed. The cap layer 76 can effectively contribute to reducing mechanical fatigue due to strain and thermal fatigue due to heat generation. From this viewpoint, it is more preferable that the tensile strength TB, the elongation at break EB, and the loss tangent LTc at 30°C satisfy the following formula.

$$30000 \leq TB \times EB/LTc \leq 50000$$

The tensile strength TB of the cap layer 76 is preferably 15 MPa or more and 30 MPa or less. Accordingly, mechanical fatigue due to strain is effectively reduced in the tread portion T. From this viewpoint, the tensile strength TB is more preferably 18 MPa or more and 25 MPa or less and further preferably 20 MPa or more and 24 MPa or less.

The elongation at break EB of the cap layer 76 is preferably 350% or more and 650% or less. Accordingly, mechanical fatigue due to strain is effectively reduced in the tread portion T. From this viewpoint, the elongation at break EB is more preferably 400% or more and 600% or less and further preferably 450% or more and 550% or less.

The loss tangent LTc at 30°C of the cap layer 76 is preferably 0.15 or more and 0.45 or less. Accordingly, thermal fatigue due to heat generation is effectively reduced in the tread portion T. From this viewpoint, the loss tangent LTc at 30°C is more preferably 0.20 or more and 0.40 or less and further preferably 0.25 or more and 0.35 or less.

In the tire 2, it is preferable that a loss tangent LTb at 70°C and a complex elastic modulus E*b of the belt topping rubber 52 satisfy the following formula.

$$50 \leq E^*b/LTb \leq 150$$

In the tire 2, heat generation in the belt topping rubber 52 is suppressed, and the stiffness of the belt topping rubber 52 is appropriately maintained. The belt 14 having this belt topping rubber 52 can effectively contribute to reducing mechanical fatigue due to strain and thermal fatigue due to heat generation. From this viewpoint, it is more preferable that the loss tangent LTb and the complex elastic modulus E*b satisfy the following formula.

$$75 \leq E^*b/LTb \leq 115$$

In the tire 2, the loss tangent LTb at 70°C of the belt topping rubber 52 is preferably 0.05 or more and 0.18 or less.
In the tire 2, heat generation in the belt topping rubber 52 is effectively suppressed. The belt 14 having this belt topping rubber 52 can effectively contribute to reducing thermal fatigue due to heat generation. From this viewpoint, the loss tangent LTb is more preferably 0.09 or more and 0.13 or less and further preferably 0.10 or more and 0.12 or less.
In the tire 2, from the viewpoint that the belt 14 can effectively contribute to reducing mechanical fatigue due to strain and thermal fatigue due to heat generation, it is more preferable that the loss tangent LTb at 70°C and the complex elastic modulus E*b of the belt topping rubber 52 satisfy the following formula and the loss tangent LTb is 0.05 or more and 0.18 or less.

$$50 \leq E^*b/LTb \leq 150$$

From the viewpoint that mechanical fatigue due to strain and thermal fatigue due to heat generation can be effectively reduced in the tread portion T, it is further preferable that the tensile strength TB, the elongation at break EB, and the loss tangent LTc at 30°C of the cap layer 76 satisfy the following formula (1), the loss tangent LTb at 70°C and the complex elastic modulus E*b of the belt topping rubber 52 satisfy the following formula (2), and the loss tangent LTb is 0.05 or more and 0.18 or less.

$$20000 \leq TB \times EB/LTc \leq 100000 \qquad \text{formula (1)}$$

$$50 \leq E^*b/LTb \leq 150 \qquad \text{formula (2)}$$

As described above, the belt 14 includes the belt cords 50, and the belt cords 50 are steel cords. Each belt cord 50 includes one or more steel filaments 80. In the case where the strength of the belt 14 and influence on the mass of the tire 2 are taken into consideration and each belt cord 50 includes a plurality of steel filaments 80, the number of steel filaments 80 included in the belt cord 50 is preferably 2 or more and 4 or less. Each belt cord 50 of the tire 2 is preferably a single wire composed of one steel filament 80 or a twisted wire made by twisting together two to four steel filaments 80.

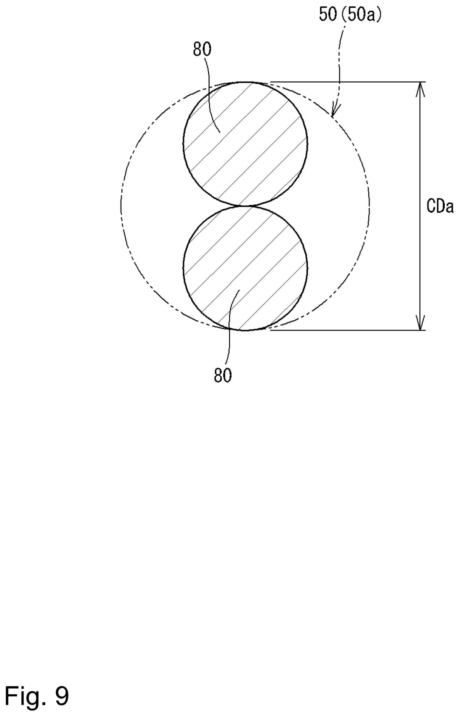

FIG. 9 shows an example of the belt cord 50 included in the belt 14. A belt cord 50a shown in FIG. 9 is a twisted wire made by twisting together two steel filaments 80. The belt cord 50a shown in FIG. 9 is a conventional belt cord. In FIG. 9, a length indicated by a double-headed arrow CDa is the cord diameter of the belt cord 50a. The cord diameter CDa of the belt cord 50a is 0.55 mm or more and 0.65 mm or less. The cord strength of the belt cord 50a is 400 N or more and 500 N or less.
As described above, in the tire 2, strain generated in the tread 4 due to the action of a load can be suppressed by forming the outer surface 4G of the tread 4 in a flat shape in an inflated state. In the tire 2, since the tread 4 is thin, heat generated due to the action of strain can also be inhibited from being accumulated in the tread 4. Therefore, even in the case where a conventional belt cord is used as each belt cord 50, the tire 2 can reduce not only mechanical fatigue due to strain but also thermal fatigue due to heat generation.

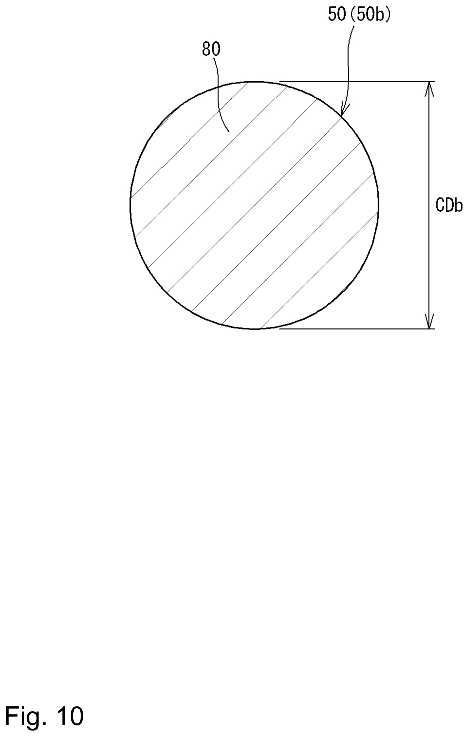

FIG. 10 shows a modification (first modification) of the belt cord 50. A belt cord 50b shown in FIG. 10 is a single wire composed of one steel filament 80. In FIG. 10, a length indicated by a double-headed arrow CDb is the cord diameter of the belt cord 50b.
The belt cord 50b shown in FIG. 10 can control the strength and weight reduction of the belt 14 in a well-balanced manner compared to the belt cord 50a. From this viewpoint, each belt cord 50 of the tire 2 is preferably the belt cord 50b shown in FIG. 10. In this case, it is preferable that the cord diameter CDb of the belt cord 50b is 0.36 mm or more and 0.42 mm or less and the cord strength of the belt cord 50b is 400 N or more and 540 N or less. Accordingly, the belt cord 50b can contribute to reducing the weight of the belt 14. The lightweight belt 14 can contribute to reducing a centrifugal force generated in the tire 2 during running. In particular, since the cord diameter CDb and the cord strength of the belt cord 50b are set in the above-described ranges, a constraining force and a centrifugal force are balanced well. The belt 14 of the tire 2 can effectively contribute to reducing mechanical fatigue due to strain and thermal fatigue due to heat generation. From this viewpoint, it is more preferable that the cord diameter CDb of the belt cord 50b is 0.38 mm or more and 0.40 mm or less and the cord strength of the belt cord 50b is 420 N or more and 480 N or less.

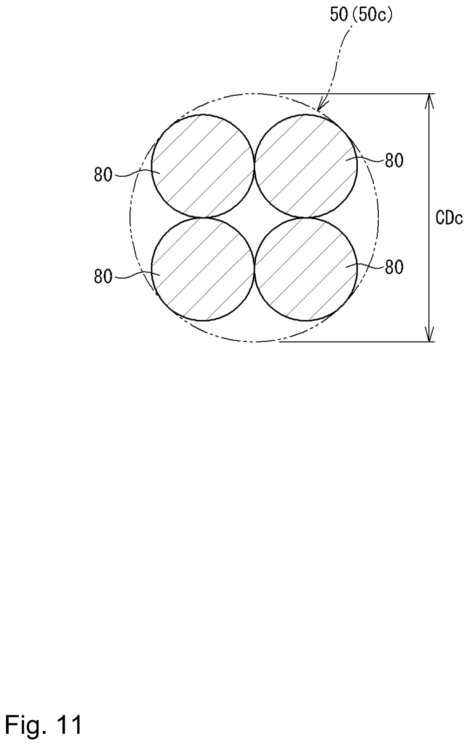

FIG. 11 shows a modification (second modification) of the belt cord 50. A belt cord 50c shown in FIG. 11 is a twisted wire made by twisting together four steel filaments 80. In FIG. 11, a length indicated by a double-headed arrow CDc is the cord diameter of the belt cord 50c.

As with the above-described belt cord 50b, the belt cord 50c shown in FIG. 11 can also control the strength and weight reduction of the belt 14 in a well-balanced manner compared to the belt cord 50a. From this viewpoint, the belt cord 50c shown in FIG. 11 may be used as each belt cord 50 of the tire 2. In this case, it is preferable that the cord diameter CDc of the belt cord 50c is 0.36 mm or more and 0.55 mm or less and the cord strength of the belt cord 50c is 350 N or more and 540 N or less. Accordingly, the belt cord 50c can contribute to reducing the weight of the belt 14. The lightweight belt 14 can contribute to reducing a centrifugal force generated in the tire 2 during running. In particular, since the cord diameter CDc and the cord strength of the belt cord 50c are set in the above-described ranges, a constraining force and a centrifugal force are balanced well. The belt 14 of the tire 2 can effectively contribute to reducing mechanical fatigue due to strain and thermal fatigue due to heat generation. From this viewpoint, it is more preferable that the cord diameter CDc of the belt cord 50c is 0.39 mm or more and 0.52 mm or less and the cord strength of the belt cord 50b is 430 N or more and 530 N or less.

From the viewpoint that a belt 14 that can effectively contribute to reducing mechanical fatigue due to strain and thermal fatigue due to heat generation is formed, each belt cord 50 is more preferably the belt cord 50c shown in FIG. 11, that is, a twisted wire made by twisting together four steel filaments 80.

In FIG. 8, a length indicated by a double-headed arrow TP is the thickness of the belt ply 44.

From the viewpoint of reducing the weight of the belt 14, in the case where the belt cord 50c shown in FIG. 11 is used as each belt cord 50, the thickness TP of the belt ply 44 is preferably 0.66 mm or more and 0.98 mm or less. In the case where the belt cord 50a shown in FIG. 9 is used as each belt cord 50, the thickness TP of the belt ply 44 is preferably 0.84 mm or more and 1.06 mm or less. In the case where the belt cord 50b shown in FIG. 10 is used as each belt cord 50, the thickness TP of the belt ply 44 is preferably 0.63 mm or more and 0.83 mm or less.

The distance between the belt cord 50 of one belt ply 44 out of two adjacent belt plies 44 and the belt cord 50 of the other belt ply 44 (in the tire 2, the distance between the belt cord 50 of the inner belt ply 46 and the belt cord 50 of the outer belt ply 48) is also referred to as inter-cord distance. In FIG. 8, a length indicated by a double-headed arrow DP represents the inter-cord distance. From the viewpoint of exhibiting the effect of reinforcing the tread portion T by the belt 14 and reducing the weight of the belt 14, the inter-cord distance DP is preferably 0.30 mm or more and 0.42 mm or less and more preferably 0.33 mm or more and 0.38 mm or less.

From the viewpoint of exhibiting the effect of reinforcing the tread portion T by the belt 14 and reducing the weight of the belt 14, the mass per unit area of one belt ply 44 is preferably 1350 g/m$^2$ or more and 1980 g/m$^2$ or less. The weight of the belt topping rubber 52 included per unit area of one belt ply 44 is preferably 600 g/m$^2$ or more and 1300 g/m$^2$ or less.

As is obvious from the above description, according to the present invention, the tire 2 that can achieve improvement of durability in an environment where a load higher than previously assumed acts, is obtained. The tire 2 of the present invention can stably exhibit its performance even when mounted to an electric vehicle which is heavier than a conventional gasoline-powered vehicle.

The above-described technology capable of achieving improvement of durability in an environment where a load higher than previously assumed acts can be applied to various tires.

[Additional Note]

The present invention includes aspects described below.

[1] A tire including a pair of beads, a carcass extending on and between the pair of beads, a tread located radially outward of the carcass and configured to come into contact with a road surface, a belt located radially outward of the carcass on a radially inner side of the tread, and a band located between the tread and the belt in a radial direction, wherein a state where the tire is fitted on a standardized rim, an internal pressure of the tire is adjusted to 290 kPa, and no load is applied to the tire is a reference state of the tire, a position, on an outer surface of the tire, corresponding to an axially outer end of a ground-contact surface of the tire that is obtained by applying a vertical load to the tire in the reference state and bringing the tire into contact with a flat surface is a reference ground-contact end, the vertical load is a maximum load capacity represented by a load index of a HIGH LOAD CAPACITY type tire specified in the ETRTO STANDARDS MANUAL 2024, having the same dimensional structural characteristics as dimensional structural characteristics included in a tire designation of the tire, a ratio CD/CW of a distance CD in the radial direction from an equator of the tire to the reference ground-contact end to a distance CW in an axial direction from the equator of the tire to the reference ground-contact end in the tire in the reference state is 0.040 or more and 0.092 or less, and a thickness TA of the tread at the equator is 6.0 mm or more and 8.0 mm or less.

[2] The tire according to [1] above, wherein a region centered on the equator and having a width in the axial direction that is 110% of a width in the axial direction of the ground-contact surface is a reference region, a region, of the reference region, centered on the equator and having a width in the axial direction that is 55% of the width in the axial direction of the ground-contact surface is a center region, a region, of the reference region, that is a portion on an axially outer side of the center region is a shoulder region, the band is made by helically winding a band strip, the band strip is a cord array in which one or more band cords are arranged, the band includes a full band covering an entirety of the belt, and a ratio Es/Ec of cord ends Es of the full band in the shoulder region to cord ends Ec of the full band in the center region is 1.2 or more and 1.6 or less.

[3] The tire according to [1] or [2] above, wherein: the tread includes a plurality of rubber layers aligned in the radial direction; among the plurality of rubber layers, the rubber layer located on an outermost side in the radial direction is a cap layer; and a tensile strength TB, an elongation at break EB, and a loss tangent LTc at 30°C of the cap layer satisfy the following formula,

$$20000 \leq TB \times EB/LTc \leq 100000.$$

[4] The tire according to any one of [1] to [3] above, wherein the belt includes a large number of belt cords aligned with each other and a belt topping rubber covering the large number of belt cords, and a loss tangent LTb at 70°C and a complex elastic modulus E*b of the belt topping rubber satisfy the following formula,

$$50 \leq E*b/LTb \leq 150.$$

[5] The tire according to [4] above, wherein the loss tangent LTb is 0.05 or more and 0.18 or less.

[6] The tire according to [4] or [5] above, wherein the belt cords are each a single wire composed of one steel filament, the belt cords each have a cord diameter of 0.36 mm or more and 0.42 mm or less, and the belt cords each have a cord strength of 400 N or more and 540 N or less.

[7] The tire according to [4] or [5] above, wherein the belt cords are each a twisted wire made by twisting together four steel filaments, the belt cords each have a cord diameter of 0.36 mm or more and 0.55 mm or less, and the belt cords each have a cord strength of 350 N or more and 540 N or less.

## Claims

1. A tire (2) comprising a pair of beads (10), a carcass (12) extending on and between the pair of beads (10), a tread (4) located radially outward of the carcass (12) and configured to come into contact with a road surface, a belt (14) located radially outward of the carcass (12) on a radially inner side of the tread (4), and a band (16) located between the tread (4) and the belt (14) in a radial direction, wherein

   a state where the tire (2) is fitted on a standardized rim (R), an internal pressure of the tire (2) is adjusted to 290 kPa, and no load is applied to the tire (2) is a reference state of the tire (2),
   a position, on an outer surface of the tire (2), corresponding to an axially outer end of a ground-contact surface of the tire (2) that is obtained by applying a vertical load to the tire (2) in the reference state and bringing the tire (2) into contact with a flat surface is a reference ground-contact end (PC),
   the vertical load is a maximum load capacity represented by a load index of a HIGH LOAD CAPACITY type tire specified in the ETRTO STANDARDS MANUAL 2024, having the same dimensional structural characteristics as dimensional structural characteristics included in a tire designation of the tire (2),
   a ratio CD/CW of a distance CD in the radial direction from an equator (Eq) of the tire (2) to the reference ground-contact end (PC) to a distance CW in an axial direction from the equator (Eq) of the tire (2) to the reference ground-contact end (PC) in the tire (2) in the reference state is 0.040 or more and 0.092 or less, and
   a thickness TA of the tread (4) at the equator (Eq) is 6.0 mm or more and 8.0 mm or less.

2. The tire (2) according to claim 1, wherein

   a region centered on the equator (Eq) and having a width in the axial direction that is 110% of a width (ACW) in the axial direction of the ground-contact surface is a reference region (RB),
   a region, of the reference region (RB), centered on the equator (Eq) and having a width in the axial direction that is 55% of the width (ACW) in the axial direction of the ground-contact surface is a center region (RC),
   a region, of the reference region (RB), that is a portion on an axially outer side of the center region (RC) is a shoulder region (RS),

the band (16) is made by helically winding a band strip (58),

the band strip (58) is a cord array in which one or more band cords (60) are arranged,

the band (16) includes a full band (54) covering an entirety of the belt (14), and a ratio Es/Ec of cord ends Es of the full band (54) in the shoulder region (RS) to cord ends Ec of the full band (54) in the center region (RC) is 1.2 or more and 1.6 or less.

3. The tire (2) according to claim 1 or 2, wherein

the tread (4) includes a plurality of rubber layers (74) aligned in the radial direction,

among the plurality of rubber layers (74), the rubber layer (74) located on an outermost side in the radial direction is a cap layer (76), and

a tensile strength TB, an elongation at break EB, and a loss tangent LTc at 30°C of the cap layer (76) satisfy the following formula,

$$20000 \leq TB \times EB/LTc \leq 100000.$$

4. The tire (2) according to any one of claims 1 to 3, wherein

the belt (14) includes a large number of belt cords (50, 50s, 50u, 50a, 50b, 50c) aligned with each other and a belt topping rubber (52) covering the large number of belt cords (50, 50s, 50u, 50a, 50b, 50c), and

a loss tangent LTb at 70°C and a complex elastic modulus E*b of the belt topping rubber (52) satisfy the following formula,

$$50 \leq E^*b/LTb \leq 150.$$

5. The tire (2) according to claim 4, wherein the loss tangent LTb is 0.05 or more and 0.18 or less.

6. The tire (2) according to claim 4 or 5, wherein

the belt cords (50b) are each a single wire composed of one steel filament,

the belt cords (50b) each have a cord diameter (CDb) of 0.36 mm or more and 0.42 mm or less, and

the belt cords (50b) each have a cord strength of 400 N or more and 540 N or less.

7. The tire (2) according to claim 4 or 5, wherein

the belt cords (50c) are each a twisted wire made by twisting together four steel filaments,

the belt cords (50c) each have a cord diameter (CDc) of 0.36 mm or more and 0.55 mm or less, and

the belt cords (50c) each have a cord strength of 350 N or more and 540 N or less.

Fig. 1

Fig. 2

58

60

62

Fig. 3

Fig. 4

Fig. 5

EP 4 768 277 A1

Fig. 6

Fig. 7

Fig. 8

Fig. 9

50 (50b)

80

CDb

Fig. 10

50 (50c)

80

80

80

80

CDc

Fig. 11

Europäisches
Patentamt
European
Patent Office
Office européen
des brevets

# EUROPEAN SEARCH REPORT

**Application Number**

EP 25 22 1075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 238 782 A1 (SUMITOMO RUBBER IND [JP]) 6 September 2023 (2023-09-06) * the whole document * | 1-7 | INV. B60C11/00 B60C9/22 |
| Y | FR 2 617 096 A1 (BRIDGESTONE CORP [JP]) 30 December 1988 (1988-12-30) * figure 1; table 1 * | 1 | |
| Y | US 2013/048185 A1 (HARIKAE SHINYA [JP] ET AL) 28 February 2013 (2013-02-28) * paragraph [0037]; figure 2 * | 2 | |
| Y | WO 2010/000299 A1 (PIRELLI [IT]; ROSSIELLO LUIGIA [IT] ET AL.) 7 January 2010 (2010-01-07) * table 4 * | 3 | |
| Y | WO 2021/079673 A1 (SUMITOMO RUBBER IND [JP]) 29 April 2021 (2021-04-29) * paragraph [0014] * | 4,5 | |
| Y | EP 4 385 757 A1 (SUMITOMO RUBBER IND [JP]) 19 June 2024 (2024-06-19) * paragraph [0040] * | 6 | TECHNICAL FIELDS SEARCHED (IPC) B60C |
| Y | WO 2017/175475 A1 (SUMITOMO ELECTRIC TOCHIGI CO LTD [JP] ET AL.) 12 October 2017 (2017-10-12) * paragraph [0008] - paragraph [0010] * | 7 | |
| A | WO 2023/198402 A1 (MICHELIN & CIE [FR]) 19 October 2023 (2023-10-19) * paragraph [0037] * | 6,7 | |

The present search report has been drawn up for all claims

| Place of search | Date of completion of the search | Examiner |
|---|---|---|
| Munich | 5 May 2026 | Schork, Willi |

EPO FORM 1503 03.82 (P04C01)

## ANNEX TO THE EUROPEAN SEARCH REPORT
## ON EUROPEAN PATENT APPLICATION NO.

EP 25 22 1075

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2026

| Patent document cited in search report | | | Publication date | Patent family member(s) | | Publication date |
|---|---|---|---|---|---|---|
| EP 4238782 | A1 | | 06-09-2023 | CN | 116691232 A | 05-09-2023 |
| | | | | EP | 4238782 A1 | 06-09-2023 |
| | | | | JP | 2023129249 A | 14-09-2023 |
| FR 2617096 | A1 | | 30-12-1988 | CA | 1319600 C | 29-06-1993 |
| | | | | FR | 2617096 A1 | 30-12-1988 |
| | | | | JP | S641608 A | 06-01-1989 |
| US 2013048185 | A1 | | 28-02-2013 | CN | 102950973 A | 06-03-2013 |
| | | | | DE | 102012214866 A1 | 28-02-2013 |
| | | | | JP | 6003024 B2 | 05-10-2016 |
| | | | | JP | 2013043548 A | 04-03-2013 |
| | | | | US | 2013048185 A1 | 28-02-2013 |
| WO 2010000299 | A1 | | 07-01-2010 | BR | PI0822796 A2 | 30-06-2015 |
| | | | | CN | 102112538 A | 29-06-2011 |
| | | | | EP | 2294123 A1 | 16-03-2011 |
| | | | | WO | 2010000299 A1 | 07-01-2010 |
| WO 2021079673 | A1 | | 29-04-2021 | CN | 114555384 A | 27-05-2022 |
| | | | | EP | 4049855 A1 | 31-08-2022 |
| | | | | JP | 7677144 B2 | 15-05-2025 |
| | | | | JP | WO2021079673 A1 | 29-04-2021 |
| | | | | WO | 2021079673 A1 | 29-04-2021 |
| EP 4385757 | A1 | | 19-06-2024 | NONE | | |
| WO 2017175475 | A1 | | 12-10-2017 | CN | 108883663 A | 23-11-2018 |
| | | | | EP | 3441238 A1 | 13-02-2019 |
| | | | | JP | 6801976 B2 | 16-12-2020 |
| | | | | JP | 2017185891 A | 12-10-2017 |
| | | | | KR | 20180125983 A | 26-11-2018 |
| | | | | US | 2019111735 A1 | 18-04-2019 |
| | | | | WO | 2017175475 A1 | 12-10-2017 |
| WO 2023198402 | A1 | | 19-10-2023 | FR | 3134539 A1 | 20-10-2023 |
| | | | | WO | 2023198402 A1 | 19-10-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017170939 A

**Non-patent literature cited in the description**

- HIGH LOAD CAPACITY. ETRTO STANDARDS MANUAL. 2024

- HIGH LOAD CAPACITY. *ETRTO STANDARDS MANUAL*, 2024